# EUROPEAN PATENT SPECIFICATION

(11) **EP 3 976 477 B1**
(45) Date of publication and mention of the grant of the patent: **10.07.2024**
(21) Application number: 20742865.7
(22) Date of filing: 21.05.2020
(51) Int. Cl.: B65B 5/10, B65B 57/10, B65B 35/14, B25J 11/00

(54) **EQUIPMENT FOR PACKAGING PRODUCTS, AND IN PARTICULAR FOR RE-PACKAGING PRODUCTS THAT HAVE ALREADY BEEN PREVIOUSLY PACKAGED**
AUSRÜSTUNG ZUR VERPACKUNG VON PRODUKTEN UND INSBESONDERE ZUR VERPACKUNG VON PRODUKTEN, DIE VORHER SCHON VERPACKT WURDEN
LES PRODUITS DEÉQUIPEMENT POUR EMBALLER DES PRODUITS, ET EN PARTICULIER POUR RÉEMBALLER LES PRODUITS QUI ONT DÉJÀ ÉTÉ EMBALLÉS

(30) Priority: 27.05.2019 IT 201900007341
(43) Date of publication of application: 06.04.2022
(60) Divisional application: 24177761.4
(73) Proprietor: DEENOVA S.R.L., 29010 Gragnano Trebbiense (PC) (IT)
(72) Inventor: RUDELLO, Fulvio, 29010 Gragnano Trebbiense (PC) (IT); NICHETTI, Roberto, 29010 Gragnano Trebbiense (PC) (IT); VERARDO, Alessandra, 29010 Gragnano Trebbiense (PC) (IT)
(74) Representative: Fanzini, Valeriano
(86) International application number: PCT/IB2020/054833
(87) International publication number: WO 2020/240361

(56) References cited:
- WO-A1-2005/058704
- WO-A1-2008/090071
- WO-A1-2018/034100
- CN-A- 106 240 910
- CN-A- 107 334 639
- KR-A- 20130 114 019
- US-A1- 2013 340 390
- US-B2- 9 170 213

## Description

### Field of application of this invention

The present invention relates to an equipment for packaging products, and in particular for re-packaging products that have already been previously packaged, in view of promoting or to promote, a corresponding use of said products.

Said products are in particular pharmaceutical or medical products, or the like, for example said products are in the form of a blister, in particular containing respective pharmaceutical forms, i.e. in the form of packages, such as boxes, containing a respective article or a drug, i.e. in the form of other articles, by way of example vials, syringes for injections or other, possibly inserted in corresponding container pouch.

The present products are preferably usable, preferably in a repackaged form, by corresponding entities, such as hospitals or the like, for the therapeutic treatment, especially of people.

### Background

Equipments for re-packaging pharmaceutical or medical products, or the like, preferably usable, in a re-packaged form, by corresponding entities, such as hospitals or the like, for the therapeutic treatment, especially of people, are known, e.g. from document WO2018034100, which equipment comprises as a whole, means for loading the products in the equipment, means for discharging the same products packaged by the equipment, and means for controlling the equipment, in particular in the form of corresponding electronic processing means.

In said already known equipments, however, the products must be supplied to the equipment in an orderly configuration, and which in particular is manually prepared directly by the operators in charge, therefore with considerable waste of time for the same staff.

Moreover, in said already known equipment, it is not possible to use intact products that would not need to be separated from the primary packaging, or previous packaging, to be repackaged by the equipment and also, to treat products of different configuration, it is necessary to provide frequent changes of the product gripping tool, with consequent operational complications and consequent loss of working times.

### Summary of the invention

With the present invention it is wished to propose a new solution and/or an alternative to the solutions so far known and in particular it is proposed to overcome one or more of the drawbacks or problems referred to above, and/or to satisfy one or more requirements referred to above and/or in any case experienced in the art, and in particular that can be deduced from the above.

An equipment for packaging products, and in particular for re-packaging products that have already been previously packaged, in view of promoting, or to promote, a corresponding use of said products is therefore provided, said products being in particular products for pharmaceutical or medical use, or the like, for example, said products being in the form of a blister, in particular containing respective pharmaceutical forms, i.e., in the form of packages, such as boxes, containing a respective article or a drug, i.e., in the form of other articles, by way of example vials, syringes for injections or other, possibly inserted in corresponding containers, especially in the form of pouches, and being preferably usable, preferably in a repackaged form, by corresponding entities, such as hospitals or the like, for the therapeutic treatment, especially of people; the equipment comprising means for loading the products in the equipment, means for discharging the same products packaged by the equipment, and means for controlling the equipment, in particular in the form of corresponding electronic processing means, and being characterized in that said loading means are adapted to receive said products to be packaged in a random loading configuration.

In this way, it is possible to carry out an easy loading of the products to be packaged by the staff in charge.

### Brief description of the drawings

This and other innovative aspects, or respective advantageous embodiments, are, however, set forth in the appended claims, the respective technical characteristics of which can be found, together with corresponding advantages achieved, in the following description, illustrating a purely non-limiting example of the embodiment of the invention, which is made with reference to the appended drawings, in which:

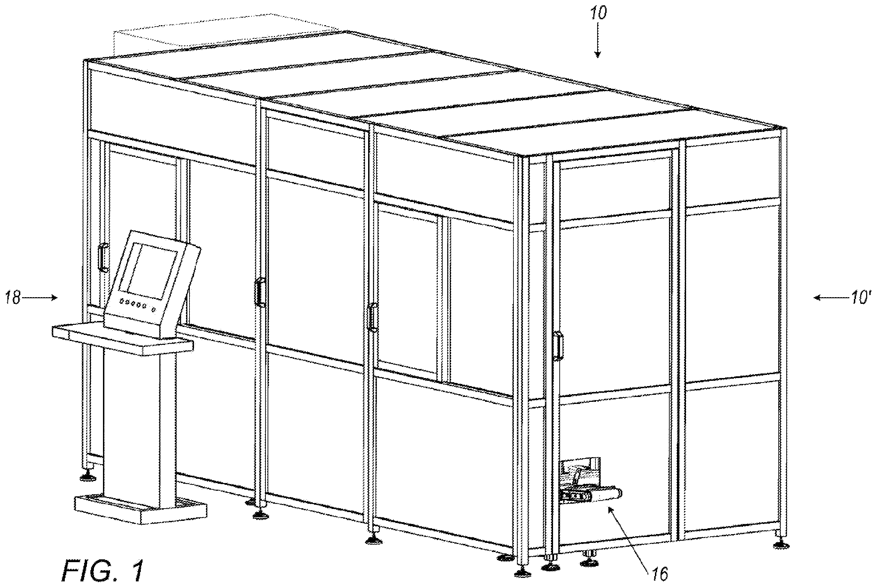

- figure 1 illustrates a schematic perspective view of a preferred embodiment of an equipment according to the present invention;

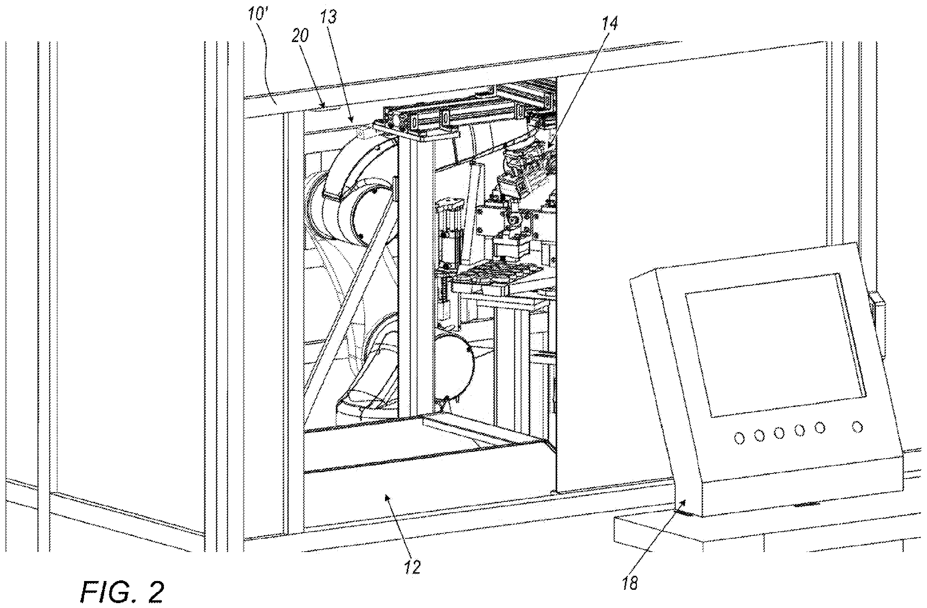

- figure 2 illustrates a schematic perspective view of a detail of the zone for loading the products of the preferred embodiment of equipment according to the present invention, view of the exterior of the equipment;
- figure 3 illustrates a schematic perspective view of a detail of the product loading zone of the preferred embodiment of equipment according to the present invention;

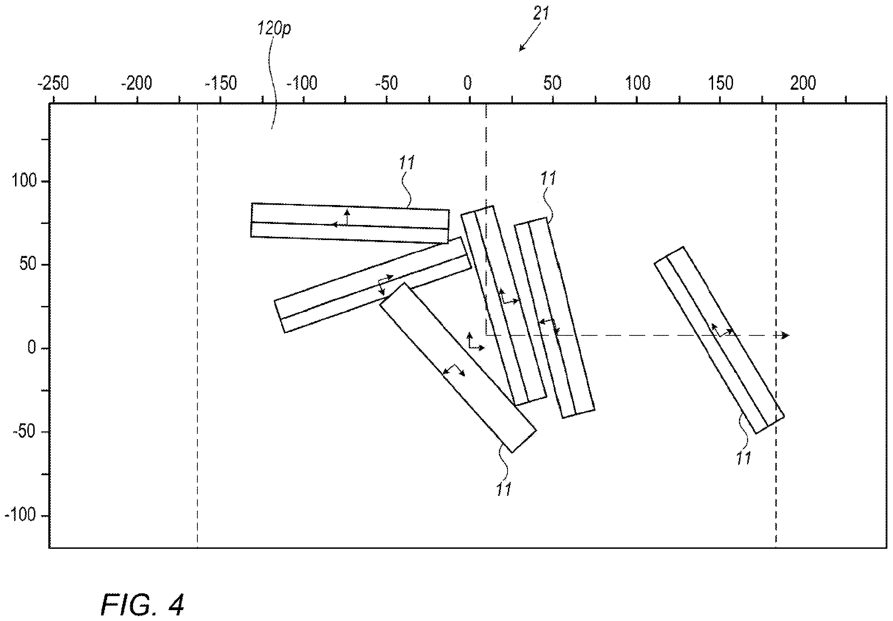

- figure 4 illustrates a schematic view of a screen for displaying the products on the resting plane of the means for loading the products of the preferred embodiment of equipment according to the present invention;
- figure 5 illustrates a schematic perspective view of a detail of the means for gripping the products of the preferred embodiment of equipment according to the present invention;
- figure 6 illustrates a schematic perspective view of the cutting and overturning plane of the products of the preferred embodiment of equipment according to the present invention;
- figure 7 illustrates a further schematic perspective view of the cutting and overturning plane of the products of the preferred embodiment of equipment according to the present invention;
- figure 8 illustrates a schematic perspective view of only the overturning plane of the products of the preferred embodiment of equipment according to the present invention;
- figure 9 illustrates a schematic perspective view of the step of application of a glue to a product to be packaged intact by the preferred embodiment of equipment according to the present invention;
- figure 10 illustrates a schematic plan view from above, with a particular illustration of the packaging means of the preferred embodiment of equipment according to the present invention;

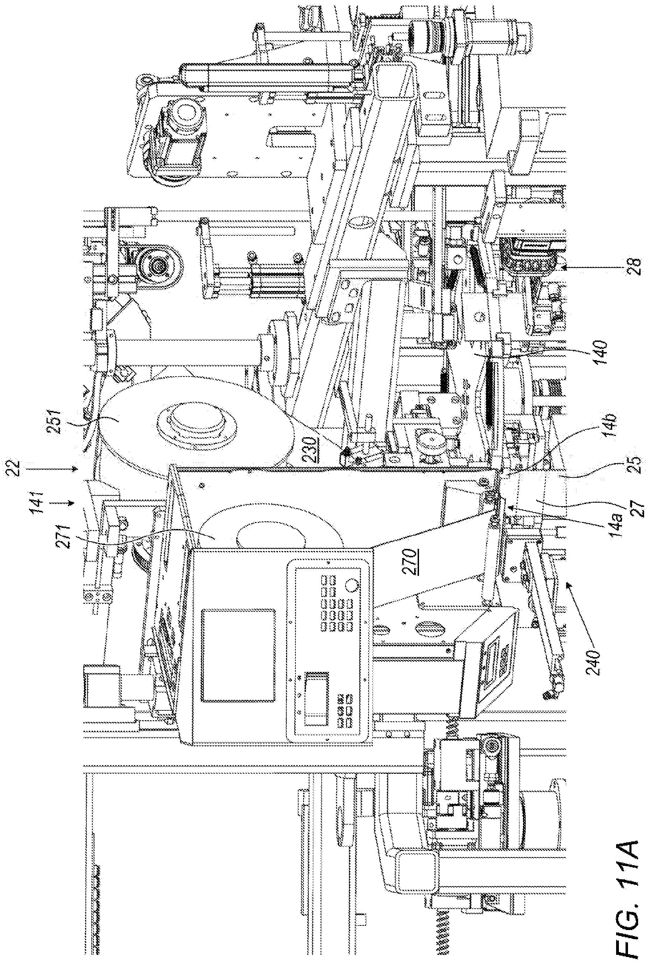

- figure 11A illustrates a schematic perspective view of a first work station of the packaging means of the preferred embodiment of equipment according to the present invention;

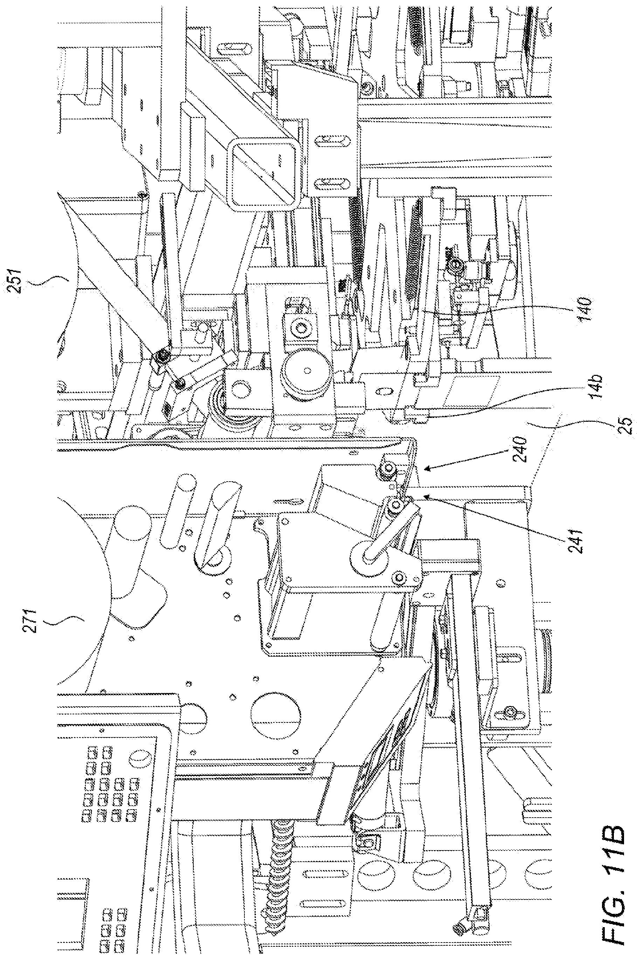

- figure 11B illustrates a schematic enlarged perspective view of the first work station of the packaging means of the preferred embodiment of equipment according to the present invention;
- figure 12A illustrates a schematic perspective view of a second work station of the packaging means of the preferred embodiment of equipment according to the present invention;
- figure 12B illustrates a further schematic perspective view of the second work station of the packaging means of the preferred embodiment of equipment according to the present invention, with a particular illustration of the means for detecting an image of the packaging member, or pouch;

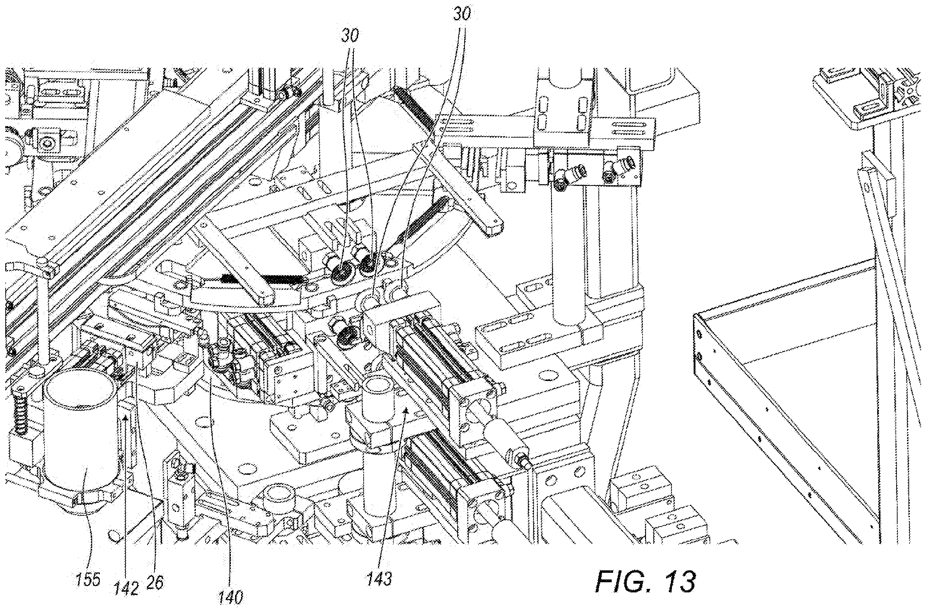

- figure 13 illustrates a schematic perspective view of a third and fourth work stations of the packaging means of the preferred embodiment of equipment according to the present invention, in which the product is applied or inserted in the packaging member, or pouch respectively and packaging member, or pouch is closed superiorly;
- figure 14 illustrates a schematic perspective view of a fifth work station of the packaging means of the preferred embodiment of equipment according to the present invention, in which an upper portion of the packaging member, or pouch is punched and die-cut;
- figure 15A illustrates a schematic perspective view of a sixth work station of the packaging means of the preferred embodiment of equipment according to the present invention, in which the packaging member, or pouch is punched and checked and discharged;
- figure 15B illustrates a schematic perspective view of the sixth work station of the packaging means of the preferred embodiment of equipment according to the present invention, seen from a different angle of figure 15A;
- figure 16 illustrates a schematic perspective view of the gathering device of the group of packaging members or pouches;
- figure 17 illustrates a schematic perspective view of the means for mutually attaching the packaging members or pouches defining a respective group of the preferred embodiment of equipment according to the present invention;
- figure 18A illustrates a schematic perspective view of a group of members or pouches containing the product made through the present equipment;
- figure 18B illustrates a schematic perspective view of a member carrying the product fixed outside and made through the present equipment.

### Detailed description of preferred embodiments of the invention

The accompanying figures illustrate a preferred embodiment 10 of an equipment for packaging products, and in particular for re-packaging products that have already been previously packaged, in view of promoting or to promote, a corresponding use of said products.

Said products treated by the equipment are in particular products for pharmaceutical or medical use, or the like, for example, said products being in the form of a blister, in particular containing respective pharmaceutical forms, i.e., in the form of packages, such as boxes, containing a respective article or a drug, for example one or more blisters or the like, i.e., in the form of other articles, by way of example vials, syringes for injections or other, possibly inserted in corresponding containers, especially in the form of pouches.

The present products treated by the equipment are preferably usable, preferably in a re-packaged form, by corresponding entities, such as hospitals or the like, for the therapeutic treatment, especially of people.

As illustrated, the equipment 10, which is mainly contained in a protective cover 10', comprises means 12 for loading the products in the equipment, means 14 for packaging said products, means 16 for discharging the same products packaged by the equipment, and means 18 for controlling the equipment, in particular in the form of corresponding electronic processing means, for example in the form of a PLC, an industrial PC, or other, and operating in the form of the control of a corresponding program software.

Advantageously, said loading means 12 are adapted to receive said products to be packaged in a random loading configuration.

In this way, it is possible to carry out an easy loading of the products to be packaged by the staff in charge.

Advantageously, as can be seen from the figures, means 13 for transferring the products from said means 12 for loading products to said means 14 for packaging said products are also provided for in the equipment.

Advantageously, as can be seen from the figures, said means 13 for transferring the products from said means 12 for loading the products to said means 14 for packaging said products comprise, or are composed of, a respective robot 13, in particular in the form of a, anthropomorphic robot, which is configured to withdraw the products from said means 12 for loading the products and for transferring them to said means 14 for packaging the same products.

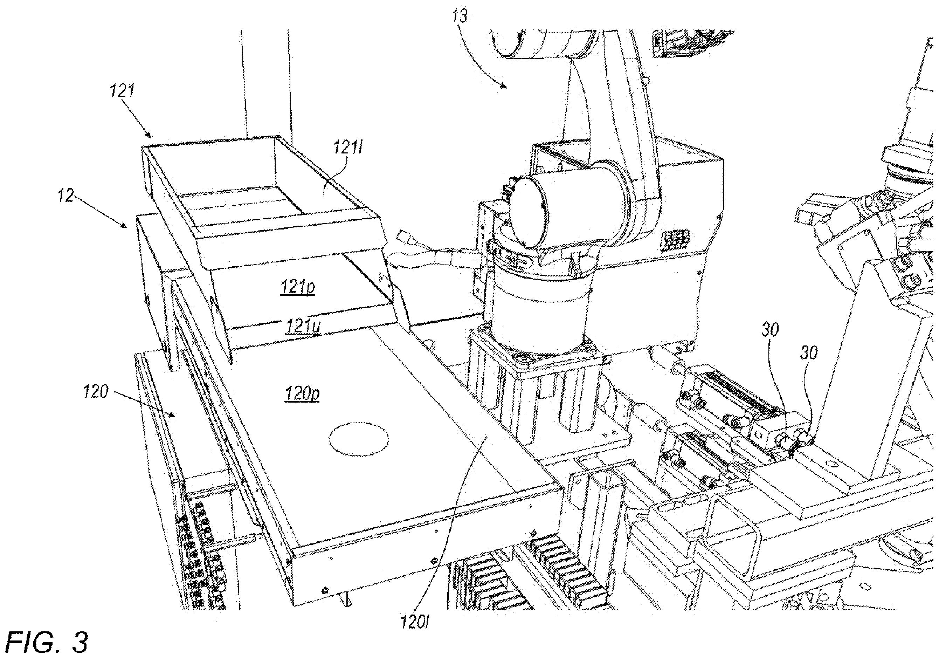

With advantage, as can be seen from the figures and in particular from figure 3, said means 12 for loading the products to be packaged comprise means 120 for supporting the products, at a respective withdrawal zone of the same products by the same transferring means 13, in particular on which the products 11 are arranged according to a random configuration.

Advantageously, as can be seen from the figures and in particular from figure 3, said means 120 for supporting the products, at a respective withdrawal zone of the same products by the same transferring means 13, comprise a respective plane 120p for resting said products, in particular surrounded by respective side walls 120l for containing the products at the same resting plane 120p.

With particular advantage, as can be seen from the figures and in particular from figure 3, in the equipment means for handling the products on said means 120 for supporting the products, are provided for at a respective withdrawal zone of the same products by the same transferring means 13, in particular said means for handling the products are defined by the same plane 120p for resting said products, which is suitably movable, preferably in a sussultatory manner, or in a vibrating manner, such as to change the position of the same products 11 that are rested on the same resting plane 120p.

In this way, it is possible to arrange the products in the best condition for withdrawing and/or viewing them, as will be better understood from the following description.

Advantageously, as can be seen from the figures and in particular from figure 3, said means 12 for loading the products to be packaged comprise respective means 121 for receiving the products in a corresponding random configuration, in particular which are adapted to pass said products to said means 120 for supporting the products, at the respective withdrawal zone of the same products by the same transferring means 13, in particular, the means 121 for receiving the products comprise a respective plane 121p for receiving said products, in particular surrounded by respective side walls 121l for containing the products at the same resting plane 121p and having a respective end, or chute, 121u for passing the products in a random configuration on said means, or plane, 121 for receiving the products.

Advantageously, as can be seen from the figures, means 20 for detecting the products on said means 12 for loading said products 11, in particular at said means 120 for supporting the same products 11 are provided for in the equipment, especially comprising, or composed of, corresponding camera means, which are adapted to detect one or more images 21 of said means, or plane, 120 for supporting the same products 11 with the products 11 supported thereon. In particular, as illustrated, the camera means are defined by a corresponding single camera 20 supported by, in particular hung on the frame, or cover, 10' to support the equipment and/or arranged above the same means, or plane, 120 supporting the same products 11.

With advantage, said means 20 for detecting the products on said means 12 for loading said products 11 are in connection with said means 18 for controlling the equipment, which are configured to identify the respective random position of the respective products 11 and for driving said means 13 for transferring the products so that the latter ones withdraw said products, randomly located, from said means 12 for loading the products in the equipment, i.e., from the respective supporting plane 120p thereof.

Advantageously, as can be seen from the figures, said means 13 for transferring the products comprise means 131, 132 for gripping the products, in particular carried by said means 13 for transferring the products.

Advantageously, as can be seen from the figures, pliers means 131 for gripping the products are provided for, in particular carried by said transferring means 13, preferably comprising a first and a second jaws 131a, 131b movable relatively to one another, moving closer together, to clamp and hold a corresponding product 11 and moving away from each other, to release said same product 11.

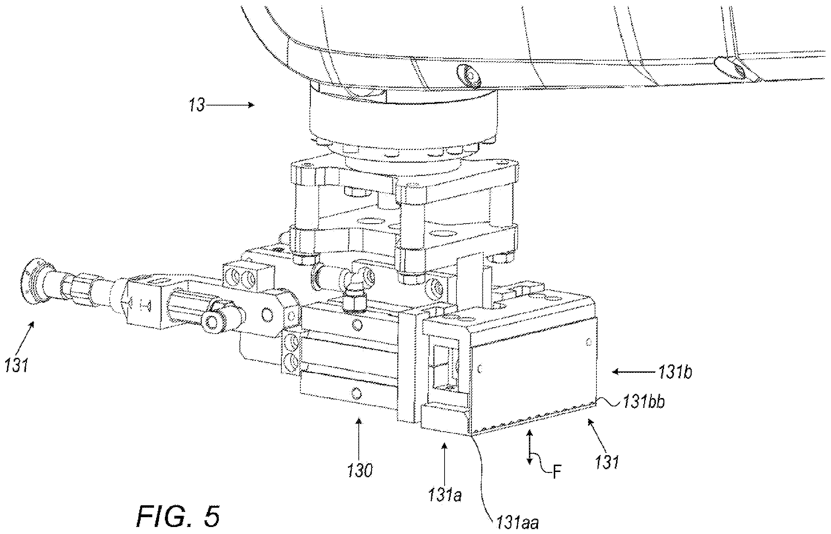

Advantageously, as can be seen from the figures, said gripping or pliers means 131 comprise said first jaw 131a is stationary, and in particular carries an outermost lip 131aa for engaging the respective product, and said second jaw 131b is movable towards, and from, said first jaw 131a, as can be seen from the arrow F in said figure 5, and preferably comprises a respective outermost lip 131bb cooperating in gripping the product with said lip 131aa of said first jaw 131a.

In this way, it is also possible to take different types of products to be packaged.

With advantage, as can be seen in particular from said figure 5, said means 13 for gripping the product comprise means 132 for suctioning and retaining a corresponding product, in particular in the form of a respective suction cup carried by a corresponding support shaft, which is preferably configured to withdraw various types of products and avoid frequent changes of the product gripping tool, as it was instead necessary according to the prior art.

Said means 132 for suctioning and retaining a corresponding product are preferably carried on a respective body 130 which carries said first and second gripping jaws 131a, 131b and extending from said body 130 on the side thereof which is opposite the one where said first and second gripping jaws 131a, 131b are located.

In particular, the suction cup 132 is preferably used to withdraw the product from the respective support plane 120p, while the plier 131 is used to hold the product at the cutting means and, if necessary, to turn the same product or blister to arrange it with the correct orientation under said cutting means, as will be better understood in any case from the continuation of the present description.

Advantageously, as can be seen from the figures, said means, or robot, 13 for transferring the products are adapted to transfer the same products, in particular starting from said means 12 for loading the products in the equipment, i.e., from the corresponding said means, or surface, 120p for supporting the products, in a plurality of respective operative positions 15.

In this way, it is also possible to package products that are completely different from one another.

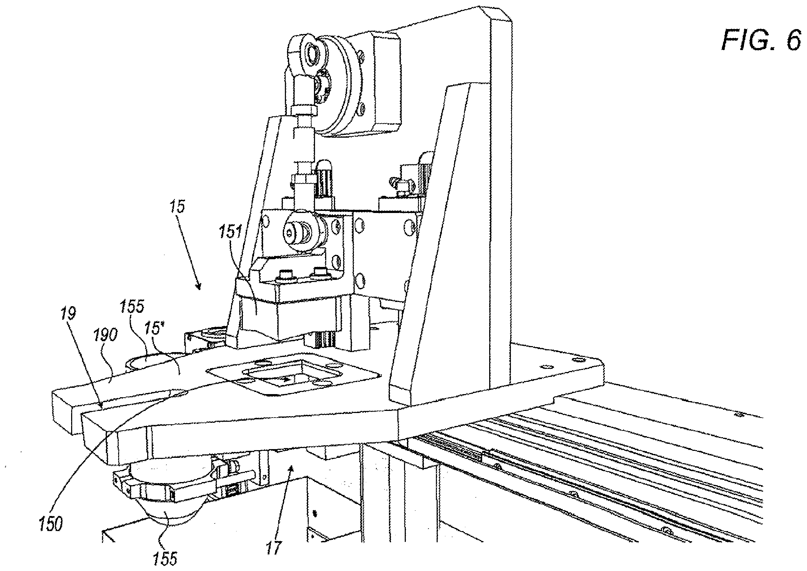

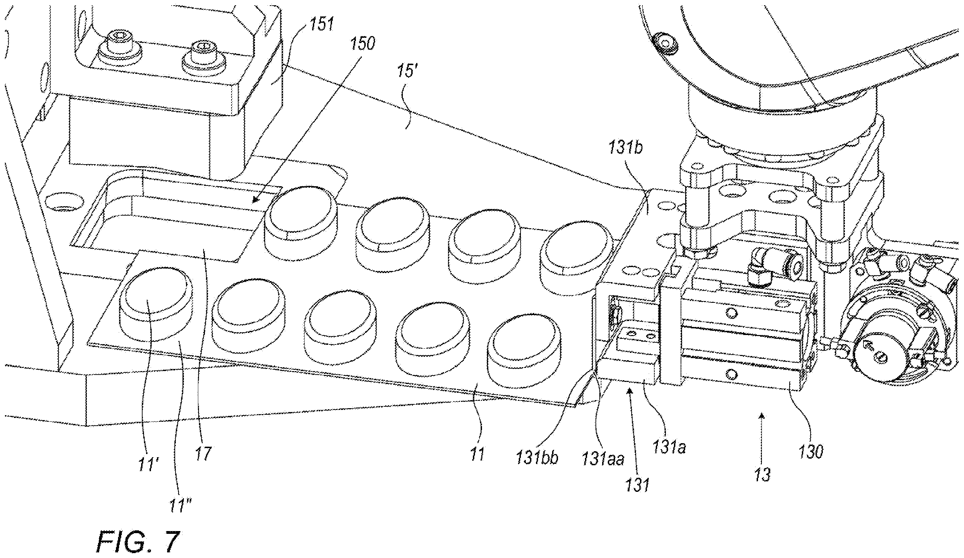

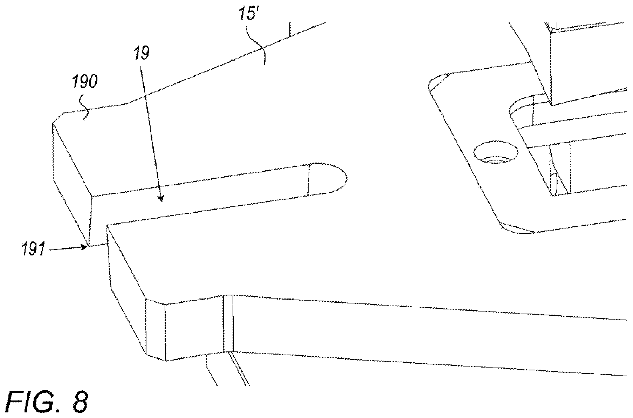

Advantageously, as can be seen from figures 6 to 8, said means, or robot, 13 for transferring the products are adapted to transfer the same products, in particular starting from said means 12 for loading the products in the equipment, i.e., from the corresponding said means, or surface, 120p for supporting the products, in a respective position 15 for cutting and separating respective portions of product from the remaining part of the same product, said cutting or separation position 15 being preferably at respective means 17 for conveying the produced towards said packaging means 14, which are especially in the form of a respective conveying channel 17 underlying the cutting, conveying zone and preferably in the form of a corresponding tubular body preferably with a vertical axis.

Advantageously, as can be seen from the figures, means for cutting or separating corresponding product portions, a small plane 15' for resting the product having a respective hole 150 and a cutter 151 that is movable between a spaced-apart or lifted position and a moved-closer or lowered position with respect to said small plane are provided for, in which it is provided to separate a corresponding portion, in particular comprising at least one respective portion or form 11' from the remaining part of the product, or body of the blister 11", so as to allow this portion to fall through said hole 150 into the small resting plane 15', which plane 15' defines corresponding contrast means for the corresponding cutting edge of the cutter 151.

In practice, said transferring means 13 withdraw the product located on the respective resting surface 120p, thanks to their own gripping means, i.e. to said suctioning or suction cup means, 132 and bring it at a resting surface, especially the projecting small plane nineteen, located in particular near or at the cutting zone, and they release the product therein to take it again subsequently through the respective pliers means 131, which provide for holding the product during the cutting step thereof.

Advantageously, as can be seen from figures 6 to 8, said means, or robot, 13 for transferring the products are adapted to transfer the same products, in particular starting from said means 12 for loading the products in the equipment, i.e., from the corresponding said means, or surface, 120 for supporting the products, in a respective position 19 for turning the product over, in particular before carrying out the cut or separation of the respective portion or form 11' from the remaining part of the product or blister 11".

Advantageously, as can be seen from figures 6 to 8, said position for turning the product over is defined by a small plane 190 having a respective slit 19, which is preferably vertical and/or open at an end to promote the insertion of the gripping means 132 i.e., of the shaft of the suctioning means 132, which, after gripping the product in an improper position, rotate it by 180° and locate, or rest it, on the small plane 190.

In this way, said means, or robots, 13 for transferring the products define advantageous means for turning the product over.

With advantage, as can be seen from figures 6 to 8, said overturning slit 19 is in the form of a through slit obtained in a small plane 190, preferably projecting from or on the extension of said small cutting plane 15', which slit 19 is preferably open in 191, at an end of said plane 190, to promote, as mentioned above, the insertion of the gripping means 132, i.e., of the shaft of the suctioning means 132, into the same slit 19.

With particular advantage, as can be seen from figure 6, said means, or robot, 13 for transferring the products are adapted to transfer the same products, in particular starting from said means 12 for loading the products in the equipment, i.e., from the corresponding means, or surface, 120p for supporting the products, in a respective position 155 for directly inserting into said packaging means 14, in particular into corresponding means for conveying the product into the support, or pouch, for the housing thereof, defined in detail from a corresponding cup 155' for gathering the product and then transferring and handing over the product, thanks to the opening of its bottom portion, to the package. Preferably, as illustrated, said direct insertion position is next to the cutting station 15.

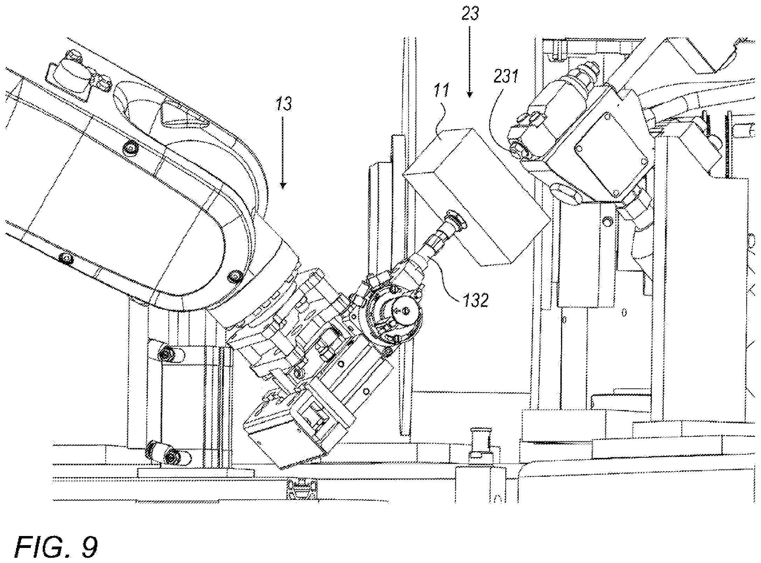

Advantageously, said means, or robot, 13 for transferring the products are adapted to transfer the same products, in particular starting from said means 12 for loading the products in the equipment, i.e., from the corresponding said means, or surface, 120p for supporting the products in an application or activation respective position 23, illustrated in figure 9, of corresponding adhesive means 231 and/or in a, preferably subsequent, adhesion position of the product to the respective housing support, or pouch, as will be better understood from the following description.

In this way, it is also possible to use intact products that would not need to be separated from the primary or previous packaging to be repackaged by the equipment.

With advantage, as can be seen from the following figures, said means 14 for packaging said products comprise a rotatable carousel 140, in particular moving forward by steps, comprising a plurality of packaging stations, in which, during the respective stop during the forward movement of the carousel 140, a respective packaging operation is provided.

Advantageously, as can be seen from the figures, means 22, which are adapted to define a packaging member, or pouch 25 are provided for, especially for providing support or housing said product 11, in particular said means 22, which are adapted to define a packaging member, or pouch 25, are in the form of a form of means that are adapted to separate a corresponding portion 25 of film defining a respective member, or pouch 25, from a corresponding film 250, in particular in the form of a form of a tubular film, preferably with side bellows, and supplied by a corresponding coil 251.

Advantageously, either packaging pouch 25, preferably at a respective station 141 of said packaging means, or carousel 14, on which said packaging member, or pouch 25 is held through corresponding side pliers 14a, 14b integral with the rotatable carousel 140.

Furthermore, means 24 are provided for, which apply a corresponding label 27 to said packaging member, or pouch 25, in particular by printing 240 said label 27 and preferably removing it from a corresponding film 270 for supporting corresponding labels, which is carried by a corresponding supplying coil 271, applying said packaging member, or pouch 25, through a corresponding pusher 241 that is movable forwards and backwards towards and against said packaging member, or pouch 25, preferentially at a respective station 141 of said packaging means, or carousel 14.

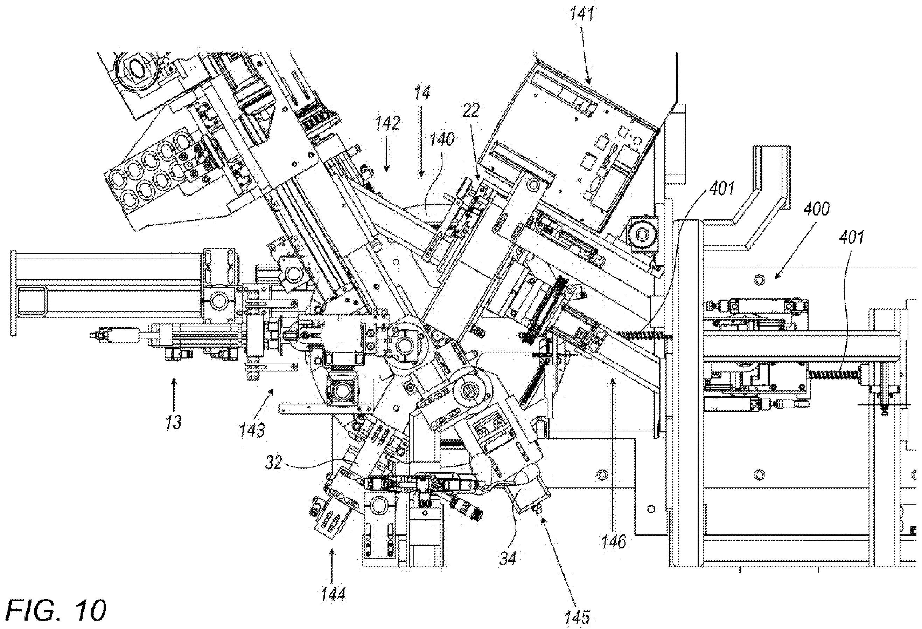

With advantage, as can be seen from the said figures 10A and 10B, said means 22 which are adapted to define a packaging member, or pouch 25 and said means that apply said label 27 operate at the same station 141 as said means that apply a corresponding label 27.

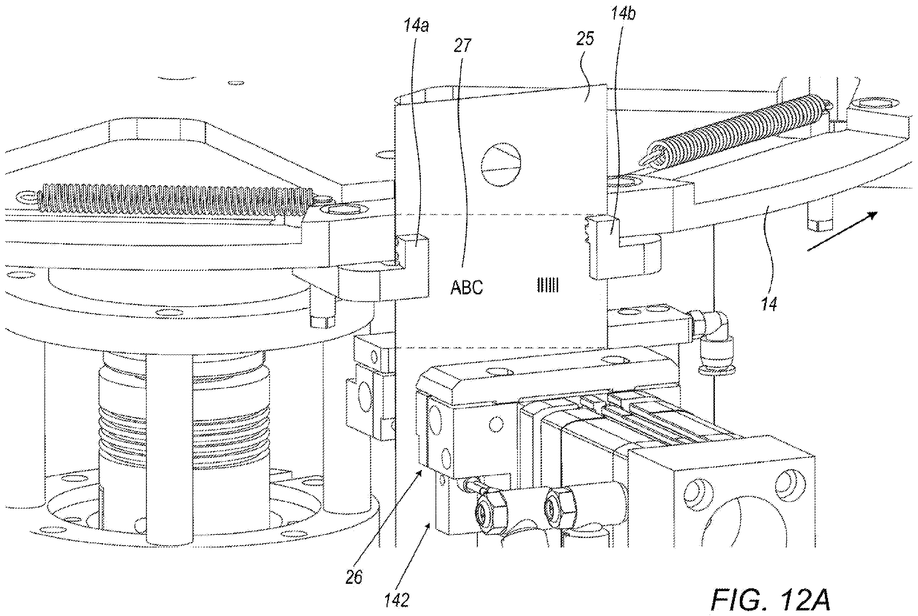

With advantage, as can be seen from the figures and in particular from figure 12A, means 26 are provided for which close the bottom, in particular through a welding or bond of corresponding opposite flaps, of the corresponding packaging member, or pouch 25, in particular at a respective and subsequent station 142 of said packaging means, or carousel, 14.

Advantageously, as can be seen from the figures, means 240 for printing the label 27 are provided for, which provide on said same label 27 at least one corresponding barcode and corresponding alphanumeric writings, immediately readable by the user.

Advantageously, as can be seen from the figures, means 28 for checking the label 27, in particular the label 27 applied onto the packaging member, or pouch 25 are provided for.

Advantageously, as can be seen from the figures, said label checking means comprise means, in particular a camera, 28 for reading the barcode and for reading the alphanumeric writings to be read by the product user, and means are provided for, in particular defined by said equipment control means 18, which are configured to compare the alphanumeric writings and the barcode provided for on the same label 27 with each other, in particular so that, if these turn out to be not compliant with one another, they drive the rejection of the same packaging member, or pouch 25 bearing the same non-compliant label.

Advantageously, said means, in particular defined by said equipment control means 18, which are configured to compare the reading of the alphanumeric writings, comprise means for the OCR conversion of the alphanumeric writings in the label into an alphanumeric text.

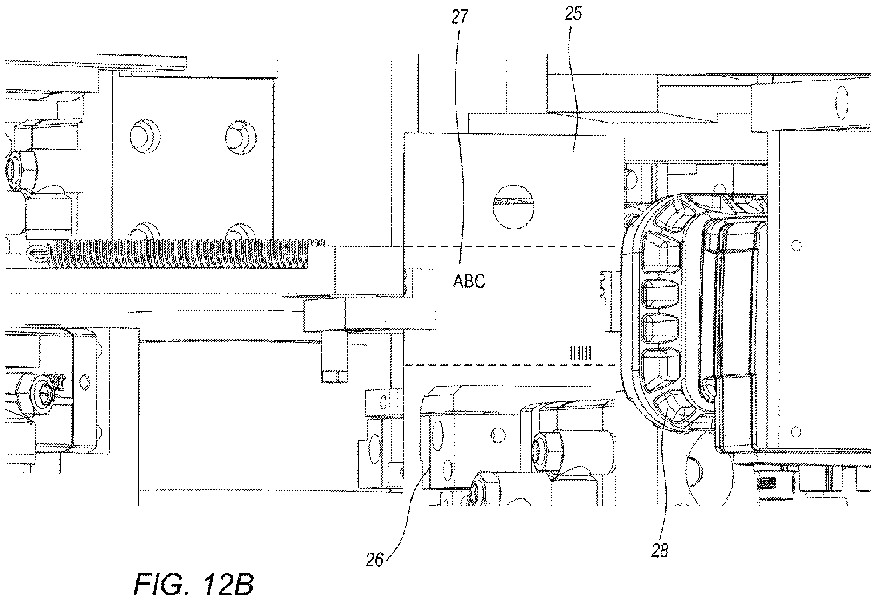

With advantage, as can be seen from the figures and in particular from figure 12B, means 26 that close the bottom of the corresponding packaging member, or pouch 25 and said means, in particular a camera, 28 for reading the barcode and the alphanumeric writings of the label 27, in particular said packaging member, or pouch 25, are provided for at the same station 142 as said packaging means, or carousel, 14.

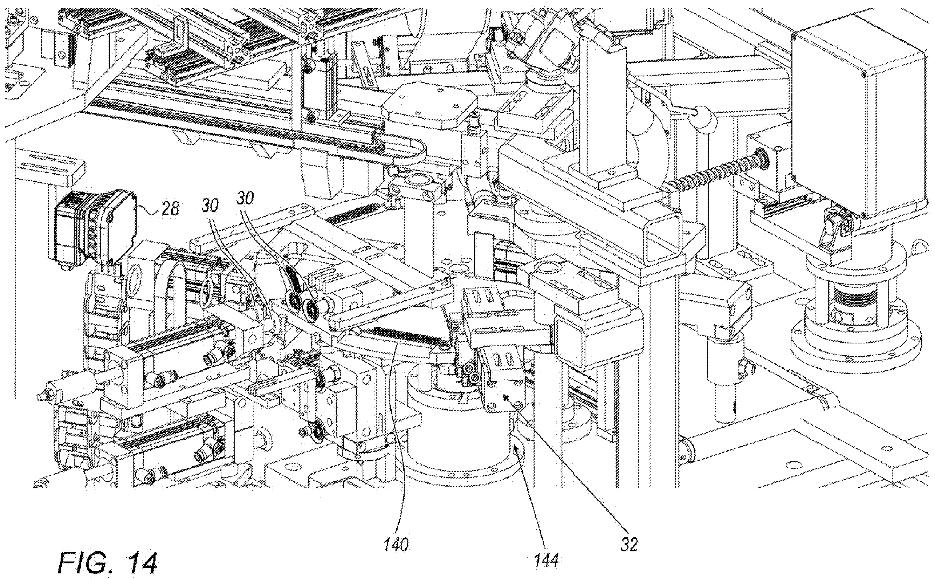

With particular advantage, as can be seen from figure 14, means for loading the product 11 on said packaging member, or pouch 25 are provided for, in particular comprising means 30, 30 and 30, 30 for opening said packaging member, or pouch 25, in view of the filling thereof with a respective product 11, in particular in the form of corresponding suction means for moving away opposite flaps of said packaging member, or pouch 25, i.e. defined by said means, or robot, 13 for transferring the products that apply the same product to said packaging member, or pouch 25, in particular at the same station 143 at which said means 30, 30, 30, 30 for opening said packaging member, or pouch 25 are provided for.

Advantageously, as can be seen from the following figure 14, means 32 for closing said packaging member, or pouch 25 on the side opposite the bottom one are provided for, in particular through a corresponding welding or bond of corresponding opposite flaps, of the corresponding packaging member, or pouch 25, in particular at a respective and subsequent station 144 of said packaging means, or carousel 14.

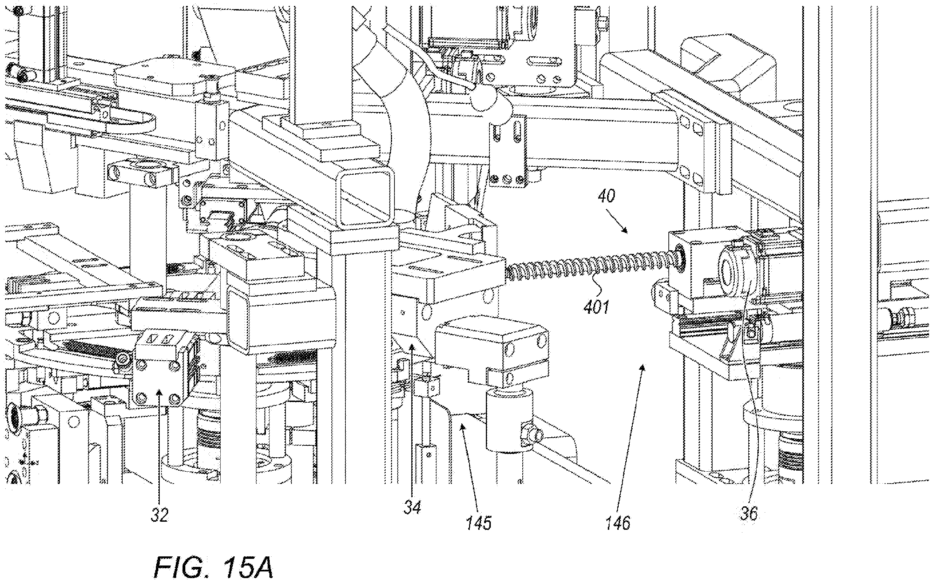

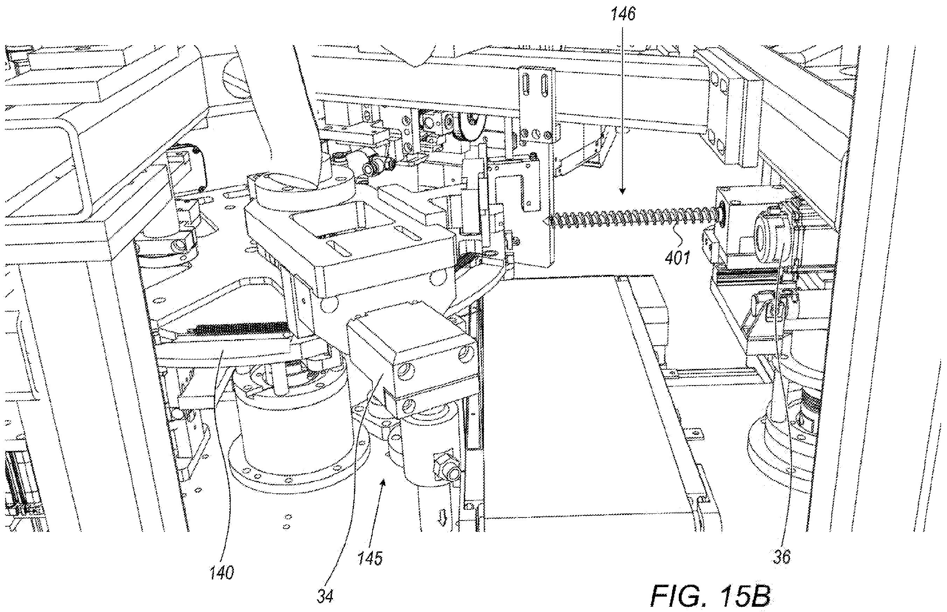

Advantageously, as can be seen from the following figure 15, means 34 for punching and die cutting an upper portion of said packaging member, or pouch 25, through corresponding cutting means are provided for, in particular provided at a respective and subsequent station 145 of said packaging means, or carousel, 14.

With advantage, as can be seen from figure 15 below, means 36 for checking the geometric profile of said packaging member, or pouch 25, are provided for, in particular defined by corresponding optical fibre sensors, i.e., by a camera, in particular provided at a respective and subsequent station 146 of said packaging means, or carousel 14, preferably at which station 146 the discharge of the same packaging member, or pouch 25 from said packaging means, or carousel 14 is provided.

Advantageously, as can be seen from the figures, means for rejecting uncompliant supports, or pouches, not particularly illustrated in the attached figures, are provided for.

Advantageously, as can be seen in particular from said figure 15, means 40 for manufacturing a group of packaging members, or pouches 25 are provided for, in particular comprising a respective rotatable shaft 401 supporting a helical screw for handling said members, or pouches, 25 towards a position of mutual moving closer.

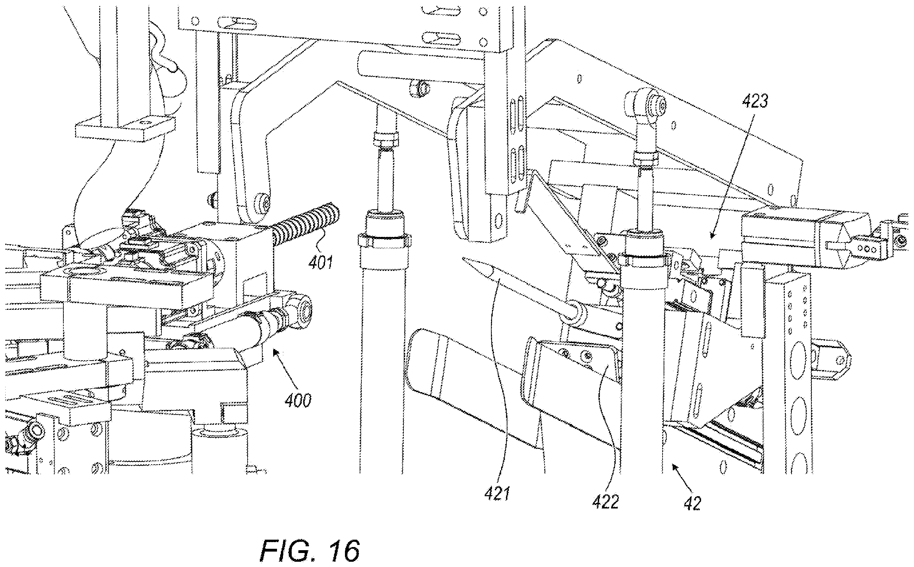

With particular advantage, as can be seen in particular from said figure 16, said helical screw shaft for gathering together 401 is carried by a corresponding rotatable device 400, which allows transferring the products to corresponding gathering means 42 in particular comprising a respective pin 421 for the insertion in a corresponding hole 31 provided for in the members, or pouches, 25 of the respective group, and a surface 422 for engaging in a gathered, or moved closer, condition of the same members, or pouches, of the group, and adapted to translate towards a transversally spaced-apart station for joining the members, or pouches 25, of the respective group.

In practice, the pin 421 for the insertion of the group of members or pouches is carried by a corresponding equipment 423, which, in turn, translates towards a position for joining or mutual attaching the members or pouches which constitute the respective group.

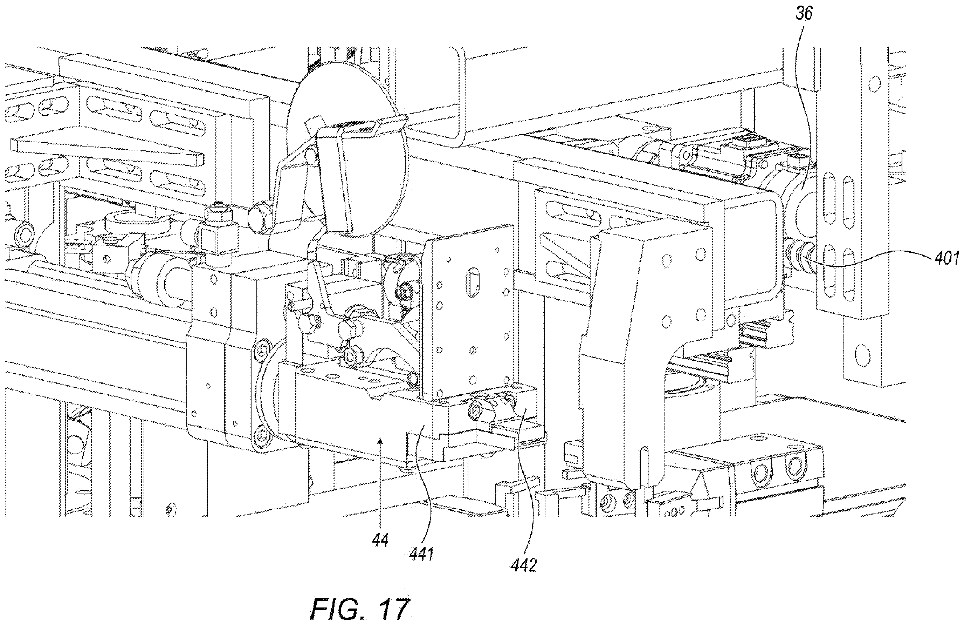

Advantageously, as can be seen in particular from figure 17, means 44 for joining the group of packaging members, or pouches 25 are provided for, which joining means comprise corresponding means for applying a corresponding joining clip 29, in particular in the form of a clip preferably made of metal, and which are especially in the form of a first and a second clamps 441, 442 between which said gathering means locate the respective group of members, or pouches 25, and which mutually move closer to one another to apply said clip to the group of packaging members, or pouches 25 at a respective outermost or upper die-cut portion thereof.

Said means 44 are not provided for on the rotatable carousel 120, but in a position that is lateral thereto.

With advantage, means are provided downstream of said joining means 44, in particular in the form of a respective chute 16, for discharging the respective group of members, or pouches, 25 from the equipment.

Advantageously, the surface 120p for resting the products is provided for with a dark shade, so as to facilitate the identification thereof by the corresponding control means 18.

Equally advantageously, it is provided for using lighting means, in particular diffused lighting, to allow easy detection of the products, especially on said plane or surface 120p for resting the same products.

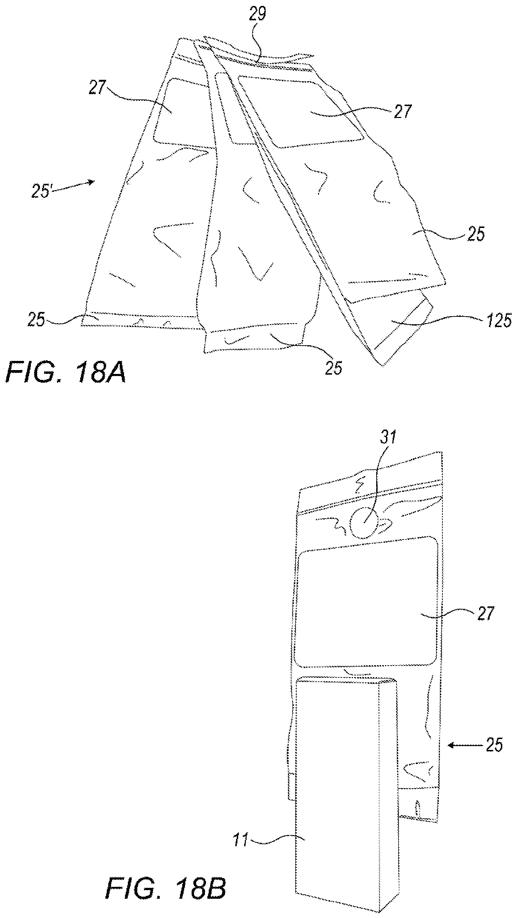

In practice, with the present equipment 10 a group 25' can be obtained which is composed of one or more members containing the product 11 and possibly a member 125 bearing the label of the group of members or pouches 25, such as the one illustrated in the figure 18A, i.e. also a corresponding group in which the respective member has the product 11 that is fixed outside the support member, as illustrated in figure 18B.

In practice, as is evident, the technical characteristics illustrated above allow, individually or in a respective combination, achieving one or more of the following advantageous results:
- it is possible to carry out an easy loading of the products to be packaged by the staff in charge;
- it is possible to arrange the products in the best condition for withdrawing and/or viewing them, as will be understood from the following description;
- it is possible to take different types of products to be packaged.
- it is also possible to package products that are completely different from one another;
- said means, or robots, for transferring the products define advantageous means for turning the product over;
- it is also possible to use intact products that would not need to be separated from the primary or previous packaging to be repackaged by the equipment;
- frequent changes of the aforesaid gripping tool which were instead necessary according to the previously known technique must not be carried out.

The present invention is susceptible to evident industrial application. The person skilled in the art will also be able to imagine numerous modifications and/or variations to be made to the same invention, while remaining within the scope of the claims.

Moreover, the person skilled in the art will be able to imagine further preferred embodiments of the invention which include one or more of the above illustrated characteristics of the preferred embodiment. Moreover, it must also be understood that all the details of the invention can be replaced by technically equivalent elements.

## Claims

1. An equipment (**10**) for packaging products (**11**), said products being products for pharmaceutical or medical use, or the like, the equipment (**10**) comprising means (**12**) for loading the products in the equipment, means (**14**) for packaging said products, means (**16**) for discharging the same products packaged by the equipment, means (**18**) for controlling the equipment, in particular in the form of corresponding electronic processing means, and means (**13**) for transferring the products from said means (**12**) for loading the products to said means (**14**) for packaging said products; and in which said loading means (**12**) are adapted to receive said products to be packaged in a random loading configuration; said means (**12**) for loading the products to be packaged comprise means (**120**) for supporting the products, at a respective withdrawal zone of the same products by the same transferring means (**13**), on which the products (**11**) are arranged according to a random configuration, said means (**120**) for supporting the products, at a respective withdrawal zone of the same products by the same transferring means (**13**), comprise a respective plane **(120p)** for resting said products; means (**20**) for detecting the products on said means (**12**) for loading said products (**11**), at said means (**120**) for supporting the same products (**11**) are provided for, comprising, or composed of, corresponding camera means, which are adapted to detect one or more images (**21**) of said means, or plane, (**120**) for supporting the same products (**11**) with the products (**11**) supported thereon; **characterized in that** the equipment is for re-packaging products that have already been previously packaged, in view of promoting, or to promote, a corresponding use of said products, for example, said products being in the form of a blister, in particular containing respective pharmaceutical forms, i.e., in the form of packages, such as boxes, containing a respective article or a drug, i.e., in the form of other articles, by way of example vials, syringes for injections or other, possibly inserted in corresponding containers, especially in the form of pouches, and being preferably usable, preferably in a re-packaged form, by corresponding entities, such as hospitals or the like, for the therapeutic treatment, especially of people; **in that** said means (**13**) for transferring the products from said means (**12**) for loading the products to said means (**14**) for packaging said products comprise, or are composed of, a respective robot (**13**) which is configured to withdraw the products from said means (**12**) for loading the products and for transferring them to said means (**14**) for packaging the same products; and **in that** said means (**20**) for detecting the products on said means (**12**) for loading said products (**11**) are in connection with said means (**18**) for controlling the equipment, which are configured to identify the respective random position of the respective products (**11**) and for driving said means (**13**) for transferring the products so that the latter ones withdraw said products, randomly located, from said means (**12**) for loading the products in the equipment, i.e., from the respective supporting plane (**120p**) thereof.

2. The equipment according to claim **1**, **characterized in that** said robot (**13**) for transferring the products is in the form of an anthropomorphic robot.

3. The equipment according to any of the preceding claims, **characterized in that** said means (**12**) for loading the products to be packaged comprise respective means (**121**) for receiving the products in a corresponding random configuration, in particular which are adapted to pass said products to said means (**120**) for supporting the products, at the respective withdrawal zone of the same products by the same transferring means (**13**).

4. The equipment according to any of the preceding claims, **characterized in that** means (**131, 132**) for gripping the products, in particular carried by said means (**13**) for transferring the products are provided for.

5. The equipment according to claim **4**, **characterized in that** said means for gripping the products comprise pliers means (**131**) that comprise a first and a second jaws (**131a, 131b**) that are movable relative to one another, moving closer together, to clamp and hold a corresponding product (**11**), and moving away from each other, to release said same product (**11**), respectively.

6. The equipment according to any of the preceding claims **4 and 5**, **characterized in that** said first jaw (**131a**) is stationary, and in particular it carries an outermost lip (**131aa**) for engaging the respective product, and said second jaw (**131b**) is movable towards, and from, said first jaw (**131a**), and it preferably comprises a respective outermost lip (**131bb**) cooperating in gripping the product with said lip (**131aa**) of said first jaw (**131a**).

7. The equipment according to any of the preceding claims, **characterized in that** said means (**13**) for gripping the product comprise means (**132**) for suctioning and retaining a corresponding product, preferably carried on a respective body (**130**), which carries said first and second gripping jaws (**131a, 131b**) and extending from said body (**130**) on the side thereof which is opposite the one where said first and second gripping jaws (**131a, 131b**) are located.

8. The equipment according to any of the preceding claims, **characterized in that** said means, or robot, (**13**) for transferring the products are adapted to transfer the same products, in particular starting from said means (**12**) for loading the products in the equipment, i.e., from the corresponding said means, or surface, **(120p)** for supporting the products, in a plurality of respective operative positions (**15**).

9. The equipment according to any of the preceding claims, **characterized in that** said means, or robot, (**13**) for transferring the products are adapted to transfer the same products, in particular starting from said means (**12**) for loading the products in the equipment, i.e., from the corresponding said means, or surface, **(120p)** for supporting the products, in a respective position (**15**) for cutting and separating respective product portions from the remaining part of the same product, said cutting or separating position (**15**) being preferably at respective means (**17**) for conveying the product towards said packaging means (**14**), which are especially in the form of a respective conveying channel (**17**) underlying the cutting zone.

10. The equipment according to any of the preceding claims, **characterized in that** means for cutting or separating corresponding product portions, a small plane (**15'**) for resting the product having a respective hole (**150**) and a cutter (**151**) that is movable between a spaced-apart or lifted position and a moved-closer or lowered position with respect to said small plane are provided for, in which it is provided to separate a corresponding portion, in particular comprising at least one respective portion or form (**11'**) from the remaining part of the product, or body of the blister (**11"**), so as to allow this portion to fall through said hole (**150**) into the small resting plane (**15'**) defining corresponding contrast means for the corresponding cutting edge of the cutter (**151**).

11. The equipment according to any of the preceding claims, **characterized in that** said means, or robot, (**13**) for transferring the products are adapted to transfer the same products, in particular starting from said means (**12**) for loading the products in the equipment, i.e., from the corresponding said means, or surface, (**120**) for supporting the products, in a respective position (**19**) for turning the product over, in particular before carrying out the cut or separation of the respective portion or form (**11'**) from the remaining part of the product or blister (**11"**).

12. The equipment according to claim **11**, **characterized in that** said position for turning the product over is defined by a small plane (**190**) having a respective slit (**19**), which is preferably vertical and/or open at an end to promote the insertion of the gripping means (**132**) i.e., of the shaft of the suctioning means (**132**), which, after gripping the product in an improper position, rotate it by 180° and locate, or rest it, on the small plane (**190**).

13. The equipment according to claim **12**, **characterized in that** said overturning slit (**19**) is in the form of a through slit obtained in a small plane (**190**), preferably projecting from or on the extension of said small cutting plane (**15'**), which slit (**19**) is preferably open (**in 191**), at an end of said plane (**190**), to promote the insertion of the gripping means (**132**), i.e., of the shaft of the suctioning means (**132**), into the same slit (**19**).

14. The equipment according to any of the preceding claims, **characterized in that** said means, or robot, (**13**) for transferring the products are adapted to transfer the same products, in particular starting from said means (**12**) for loading the products in the equipment, i.e., from the corresponding said means, or surface, **(120p)** for supporting the products, in a respective position (**155**) for directly inserting into said packaging means (**14**), in particular into corresponding means for conveying the product into the support, or pouch, for the housing thereof.

15. The equipment according to any of the preceding claims, **characterized in that** said means, or robot, (**13**) for transferring the products are adapted to transfer the same products, in particular starting from said means (**12**) for loading the products in the equipment, i.e., from the corresponding said means, or surface, (**120**) for supporting the products, in a respective application or activation position of corresponding adhesive means and/or in a, preferably subsequent, adhesion position of the product to the respective housing support, or pouch.

## Patentansprüche

1. Ausrüstung (10) zum Verpacken von Produkten (11), wobei es sich bei den Produkten um Produkte für pharmazeutische oder medizinische Zwecke oder dergleichen handelt, wobei die Ausrüstung (10) Mittel (12) zum Laden der Produkte in die Ausrüstung, Mittel (14) zum Verpacken der Produkte, Mittel (16) zum Entladen der von der Ausrüstung verpackten Produkte, Mittel (18) zur Steuerung der Ausrüstung, insbesondere in Form entsprechender elektronischer Verarbeitungsmittel, und Mittel (13) zum Übertragen der Produkte von den Mitteln (12) zum Laden der Produkte bis die Mittel (14) zum Verpacken der Produkte, und wobei die Lademittel (12) dazu ausgelegt sind, um die zu verpackenden Produkte in einer zufälligen Ladekonfiguration aufzunehmen, wobei die Mittel (12) zum Laden der zu verpackenden Produkte (120) zum Halten der Produkte in Übereinstimmung mit einer jeweiligen Entnahmezone derselben Produkte durch dasselbe Transportmittel (13), vorgesehen sind, wobei die Produkte (11) in einer zufälligen Konfiguration angeordnet sind, wobei die Mittel (120) zum Tragen der Produkte entsprechend einer jeweiligen Entnahmezone derselben Produkte durch dasselbe Transportmittel (13) eine entsprechende Ebene (120p) umfassen, zum Ablegen der Produkte; Mittel (20) zum Erkennen der Produkte auf den Mitteln (12) zum Laden der Produkte (11), wobei die Mittel (120) zum Halten derselben Produkte Mittel für entsprechende Kameras umfassen oder daraus bestehen, die geeignet sind, ein oder mehrere Bilder (21) der Mittel oder der Ebene (120) zu erfassen, zum Tragen derselben Produkte (11) mit den darauf getragenen Produkten (11), **dadurch gekennzeichnet, dass** die Ausrüstung zum Umpacken von Produkten vorgesehen ist, die bereits zuvor verpackt wurden, um sie zu fördern oder eine entsprechende Verwendung dieser Produkte zu fördern, beispielsweise in Form eines Blisters, der insbesondere entsprechende pharmazeutische Formen enthält, das heißt in Form von Packungen, wie Schachteln, die einen entsprechenden Artikel oder Medizin enthalten, beispielsweise in Form von anderer Artikeln, zum Beispiel Fläschchen, Injektionsspritzen oder Ähnliches, gegebenenfalls in entsprechende Behältnisse, insbesondere in Form von Taschen, eingelegt werden und vorzugsweise in umverpackter Form, von entsprechenden Einrichtungen, wie Krankenhäusern o.ä., d.h. zur therapeutischen Behandlung, insbesondere von Personen, verwendbar sind; dass die Mittel (13) zum Transportieren der Produkte von den Mitteln (12) zum Laden der Produkte zu den Mitteln (14) zum Verpacken der Produkte jeweils einen Roboter (13) umfassen oder daraus bestehen, der zur Produktentnahme von den Mitteln (12) zum Laden der Produkte und für ihren Transport zu den Mitteln (14) zum Verpacken derselben Produkte, konfiguriert ist; und dass die Mittel (20) zum Erkennen der Produkte auf den Mitteln (12) zum Laden der Produkte (11) mit den Mitteln (18) zur Steuerung der Ausrüstung in Verbindung stehen, die so konfiguriert sind, dass sie die jeweilige zufällige Position der Produkte (11) identifizieren und um die Mittel (13) zum Transport der Produkte zu betätigen, so dass diese die zufällig angeordneten Produkte aus den Mitteln (12) zum Laden der Produkte in die Anlage entnehmen, d. h. durch die jeweiligen Trägerebene (120p) davon.

2. Ausrüstung nach Anspruch 1, **dadurch gekennzeichnet, dass** der Roboter (13) zum Übertragen der Produkte in Form eines anthropomorphen Roboters ausgebildet ist.

3. Ausrüstung nach einem der vorhergehenden Ansprüche, **dadurch gekennzeichnet, dass** die Mittel (12) zum Laden der zu verpackenden Produkte entsprechende Mittel (121) zum Empfangen der Produkte in einer entsprechenden zufälligen Konfiguration umfassen, die insbesondere für den Durchgang der Produkte zu den Produktunterstützungsmitteln (120) auf der Höhe der jeweiligen Entnahmezone derselben Produkte durch dieselben Transfermittel (13), vorgesehen sind.

4. Ausrüstung nach einem der vorhergehenden Ansprüche, **dadurch gekennzeichnet, dass** Mittel (131, 132) zum Greifen der Produkte vorgesehen sind, die insbesondere von den Mitteln (13) zum Übertragen der Produkte getragen werden.

5. Ausrüstung nach Anspruch 4, **dadurch gekennzeichnet, dass** die Mittel zum Greifen der Produkte Greifmittel (131) umfassen, die eine erste und eine zweite Backe (131a, 131b) umfassen, die relativ zueinander beweglich sind und sich einander nähern, um ein entsprechendes Produkt (11) zu klemmen und halten, und sich voneinander entfernen, um das jeweilige Produkt (11) freizugeben.

6. Ausrüstung nach einem der vorhergehenden Ansprüche 4 und 5, **dadurch gekennzeichnet, dass** die erste Backe (131a) fest ist und insbesondere eine äußerste Lippe (131aa) trägt, um das jeweilige Produkt in Eingriff zu nehmen, und dass die zweite Backe (131b) zu und von der ersten Backe (131a) bewegbar ist und vorzugsweise eine entsprechende äußerste Lippe (131bb) umfasst, die zusammenwirkt, um das Produkt mit der Lippe (131aa) der ersten Backe (131a) zu greifen.

7. Ausrüstung nach einem der vorhergehenden Ansprüche, **dadurch gekennzeichnet, dass** die Mittel (13) zum Ergreifen des Produkts Mittel (132) zum Ansaugen und Halten eines entsprechenden Produkts umfassen und vorzugsweise von einem entsprechenden Körper (130) getragen sind, der erste und zweite Greifbacken (131a, 131b) trägt, die sich von dem Körper (130) auf der Seite desselben erstrecken, die derjenigen gegenüberliegt, auf der sich die ersten und zweiten Greifbacken (13a, 13b) befinden.

8. Ausrüstung nach einem der vorhergehenden Ansprüche, **dadurch gekennzeichnet, dass** die Mittel oder Roboter (13) zum Übertragen der Produkte so ausgelegt sind, dass sie die gleichen Produkte übertragen können, insbesondere von den Mitteln (12) zum Laden der Produkte in die Ausrüstung, das heißt aus den entsprechenden Mitteln oder Oberflächen (120p), zum Tragen der Produkte in einer Vielzahl jeweiliger Betriebspositionen (15).

9. Ausrüstung nach einem der vorhergehenden Ansprüche, **dadurch gekennzeichnet, dass** die Mittel oder Roboter (13) zum Übertragen der Produkte dazu geeignet sind, um dieselben Produkte zu übertragen, insbesondere von den Mitteln (12) zum Laden der Produkte in die Ausrüstung, das heißt von den entsprechenden Mitteln oder Oberfläche (120p), zum Stützen der Produkte, in einer jeweiligen Position (15) zum Schneiden und Trennen der jeweiligen Produktportionen vom restlichen Teil desselben Produkts, wobei sich die Schneid- oder Trennposition (15) vorzugsweise auf der Höhe jeweiliger Mittel (17) zum Fördern des Produkts zu den Verpackungsmitteln (14) befindet, die insbesondere die Form jeweils eines unter der Schneidzone liegenden Transportkanals (17) aufweisen.

10. Ausrüstung nach einem der vorhergehenden Ansprüche, **dadurch gekennzeichnet, dass** die Mittel zum Schneiden oder Trennen entsprechender Produktportionen eine kleine Ebene (15') zum Ablegen des Produkts mit einem entsprechenden Loch (150) und ein Messer (151) umfassen, die zwischen einer beabstandeten oder angehobenen Position und einer näheren oder abgesenkten Position in Bezug auf die kleine Ebene bewegbar sind, wobei ein entsprechendes Teil, das insbesondere mindestens ein entsprechendes Teil oder eine entsprechende Form (11') zum Abtrennen von dem verbleibenden Teil des Produkts oder dem Körper des Blisters (11'') umfasst, so dass dieser Teil durch das Loch (150) in die kleine Ruheebene (15') fallen kann, die entsprechende Kontrastmittel für die entsprechenden Schneidkante des Messers (151) definiert.

11. Ausrüstung nach einem der vorhergehenden Ansprüche, **dadurch gekennzeichnet, dass** die Mittel oder Roboter (13) zum Übertragen von Produkten so ausgelegt sind, dass sie dieselben Produkte übertragen können, insbesondere von den Mitteln (12) zum Laden der Produkte in die Ausrüstung, nämlich von den entsprechenden Mitteln oder Oberflächen (120) zum Halten der Produkte in einer jeweiligen Position (19) zum Umwerfen des Produkts, insbesondere vor dem Schneiden oder Trennen des jeweiligen Teils oder der jeweiligen Form (11'), von dem restlichen Teil des Produkts oder des Blister (11'').

12. Ausrüstung nach Anspruch 11, **dadurch gekennzeichnet, dass** die Produktdrehposition durch eine kleine Ebene (190) mit einem entsprechenden Schlitz (19) definiert ist, der vorzugsweise vertikal und/oder an einem Ende offen ist, um das Einführen des Greifmittel (132) zu erleichtern, das heißt die Stange des Saugmittels (132), die, nachdem sie das Produkt in einer ungeeigneten Position erfasst haben, es um 180° drehen und es auf der kleinen Ebene (190) zu anordnen bzw. ablegen.

13. Ausrüstung nach Anspruch 12, **dadurch gekennzeichnet, dass** der Wendeschlitz (19) die Form eines durchgehenden Schlitzes hat, der in einer kleinen Ebene (190) erhalten ist und vorzugsweise von oder auf der Verlängerung der kleinen Schnittebene (15') vorsteht, wobei der Schlitz (19) vorzugsweise an einem Ende der Ebene (190) (bei 191) offen ist, um das Einführen des Greifmittels (132), d. h. der Stange des Saugmittels (132), im demselben Schlitz (19) zu erleichtern.

14. Ausrüstung nach einem der vorhergehenden Ansprüche, **dadurch gekennzeichnet, dass** die Mittel oder Roboter (13) zum Übertragen von Produkten so ausgelegt sind, dass sie dieselben Produkte übertragen können, insbesondere von den Mitteln (12) zum Laden der Produkte in die Ausrüstung, nämlich von den entsprechenden Mittel oder Oberflächen (120p) zum Tragen der Produkte in einer entsprechenden Position (155) zum direkten Einsetzen in das Verpackungsmittel (14), insbesondere in die entsprechenden Mittel zum Befördern des Produkts in die Halterung oder den Beutel, für die Unterbringung derselben.

15. Ausrüstung nach einem der vorhergehenden Ansprüche, **dadurch gekennzeichnet, dass** die Mittel oder Roboter (13) zum Übertragen der Produkte so ausgelegt sind, dass sie die gleichen Produkte übertragen können, insbesondere von den Mitteln (12) zum Laden der Produkte in die Ausrüstung, d.h. aus dem entsprechenden Mittel oder der Oberfläche (120) zum Tragen der Produkte in einer jeweiligen Position der Anwendung oder Aktivierung des entsprechenden Klebemittels und/oder in einer Position der vorzugsweise späterer Adhäsion des Produkts an der jeweiligen Halterung bzw. Tasche, befestigt werden.

## Revendications

1. Equipement (10) pour emballer des produits (11), lesdits produits étant des produits à usage pharmaceutique ou médical, ou analogues, l'équipement (10) comprenant des moyens (12) pour charger les produits dans l'équipement, des moyens (14) pour emballer lesdits produits, des moyens (16) pour décharger les mêmes produits emballés par l'équipement, des moyens (18) pour contrôler l'équipement, notamment en forme de moyens de traitement électroniques correspondants, et des moyens (13) pour transférer les produits à partir desdits moyens (12) pour charger les produits desdits moyens (14) pour emballer lesdits produits, et dans lequel lesdits moyens de chargement (12) sont adaptés pour recevoir lesdits produits à emballer dans une configuration de chargement aléatoire, lesdits moyens (12) pour le chargement des produits à emballer comprenant des moyens (120) pour supporter le produits en correspondance d'une respective zone de retrait des mêmes produits par les mêmes moyens de transport (13), sur lesquels les produits (11) sont disposés selon une configuration aléatoire, lesdits moyens (120) de support des produits, en correspondance avec une respective zone de retrait des mêmes produits par les mêmes moyens de transport (13), comprenant un respectif plan (120p) pour déposer lesdits produits, des moyens (20) pour détecter les produits sur lesdits moyens (12) pour charger lesdits produits (11), et lesdits moyens (120) de support des mêmes produits étant prévus pour comprendre ou étant composés de moyens de caméra correspondants, qui sont adaptés pour détecter une ou plusieurs images (21) desdits moyens, ou plan (120), pour supporter les mêmes produits (11) avec les produits (11) supportés sur celui-ci, **caractérisé en ce que** l'équipement est prévu pour reconditionner des produits qui ont déjà été emballés précédemment, à fin de favoriser ou pour favoriser un usage correspondant desdits produits, par exemple lesdits produits ayant la forme d'un blister, contenant notamment des formes pharmaceutiques respectives, c'est-à-dire sous la forme d'emballages, tels que des boîtiers, contenant un article respectif ou un médicament, c'est-à-dire sous la forme d'autres articles, à titre d'exemple de flacons, de seringues pour injections ou autres, éventuellement insérés dans des récipients correspondants, notamment sous forme de pochettes, et étant de préférence utilisables, de préférence sous une forme reconditionnée, par des entités correspondantes, telles que des hôpitaux ou analogues, pour le traitement thérapeutique, notamment des personnes; que lesdits moyens (13) pour le transport des produits à partir desdits moyens (12) pour charger les produits auxdits moyens (14) pour emballer lesdits produits comprennent, ou sont composés per un robot (13) respectif, qui est configuré pour le retrait des produits à partir desdits moyens (12) pour charger les produits et pour leur transport vers lesdits moyens (14) pour emballer les mêmes produits; et que lesdits moyens (20) pour détecter les produits sur lesdits moyens (12) pour charger lesdits produits (11) sont en connexion avec lesdits moyens (18) pour contrôler l'équipement, qui sont configurés pour identifier la position aléatoire respective des produits (11) respectifs et pour actionner lesdits moyens (13) pour le transport des produits, de telle sorte que ceux derniers retirent lesdits produits, localisés en manière aléatoire, à partir desdits moyens (12) pour charger les produits dans l'équipement, c'est-à-dire par le plan de support (120p) respectif de celui-ci.

2. Equipement selon la revendication 1, **caractérisé en ce que** ledit robot (13) pour transférer les produits a la forme d'robot anthropomorphe.

3. Equipement selon l'une quelconque des revendications précédentes, **caractérisé en ce que** lesdits moyens (12) de chargement des produits à emballer comprennent des moyens respectifs (121) pour recevoir les produits dans une configuration aléatoire correspondante, en particulier adaptés pour faire passer lesdits produits vers lesdits moyens (120) de support des produits, au niveau de la zone de retrait respective des mêmes produits par les mêmes moyens de transfert (13).

4. Equipement selon l'une quelconque des revendications précédentes, **caractérisé en ce que** sont prévus des moyens (131, 132) de préhension des produits, notamment portés par lesdits moyens (13) de transfert des produits.

5. Equipement selon la revendication 4, **caractérisé en ce que** lesdits moyens de préhension des produits comprennent des moyens de pince (131) qui comprennent une première et une deuxième mâchoires (131a, 131b) qui sont mobiles l'une par rapport à l'autre, se rapprochent l'une de l'autre pour serrer et maintenir un produit correspondant (11), et s'éloignent l'une de l'autre pour libérer ledit produit (11) respectivement.

6. Equipement selon l'une quelconque des revendications précédentes 4 et 5, **caractérisé en ce que** ladite première mâchoire (131a) est fixe, et en particulier elle porte une lèvre (131aa) la plus à l'extérieur pour engager le produit respectif, et ladite deuxième mâchoire (131b) est mobile vers et depuis ladite première mâchoire (131a), et elle comprend de préférence une lèvre respective (131bb) la plus à l'extérieur, coopérant pour la préhension des produit avec ladite lèvre (131aa) de ladite première mâchoire (131a).

7. Equipement selon l'une quelconque des revendications précédentes, **caractérisé en ce que** lesdits moyens (13) pour la préhension du produit comprennent des moyens (132) pour aspirer et retenir un produit correspondant, de préférence portés sur un corps respectif (130), qui porte lesdites première et deuxième mâchoires de préhension (131a, 131b) et s'étendant depuis ledit corps (130) du côté de celui-ci qui est opposé à celui-ci, où ladite première et deuxième mâchoires de préhension (13a, 13b) sont situées.

8. Equipement selon l'une quelconque des revendications précédentes, **caractérisé en ce que** lesdits moyens, ou robot (13), de transfert des produits sont adaptés pour transférer les mêmes produits, notamment à partir desdits moyens (12) de chargement des produits dans l'équipement, c'est-à-dire depuis lesdits moyens, ou surface (120p), correspondants, de support des produits, dans une pluralité de positions opérationnelles respectives (15) .

9. Equipement selon l'une quelconque des revendications précédentes, **caractérisé en ce que** lesdits moyens, ou robot (13), de transfert des produits sont adaptés pour transférer les mêmes produits, notamment à partir desdits moyens (12) de chargement des produits dans l'équipement, c'est-à-dire depuis lesdits moyens, ou surface (120p), correspondants, de support des produits, dans une position respective (15) de découpe et de séparation des portions de produit respectives de la partie restante du même produit, ladite position (15) de découpe ou de séparation étant de préférence au niveau de moyens respectifs (17) d'acheminement du produit vers lesdits moyens d'emballage (14), qui ont notamment la forme d'un canal de transport (17) respectif sous-jacent à la zone de coupe.

10. Equipement selon l'une quelconque des revendications précédentes, **caractérisé en ce que** des moyens pour couper ou séparer des portions de produit correspondantes, un petit plan (15') pour reposer le produit ayant un trou respectif (150) et un couteau (151) qui est mobile entre une position espacée ou levée et une position rapprochée ou abaissée par rapport audit petit plan sont prévus, dans lesquels il est prévu de séparer une partie correspondante, comprenant notamment au moins une partie ou forme (11') respective, de la partie restante du produit, ou corps du blister (11"), de manière à permettre à cette partie de tomber à travers ledit trou (150) dans le petit plan de repos (15') définissant un moyen de contraste correspondant pour le bord tranchant correspondant du couteau (151).

11. Equipement selon l'une quelconque des revendications précédentes, **caractérisé en ce que** lesdits moyens, ou robot (13), de transfert des produits sont adaptés pour transférer les mêmes produits, notamment à partir desdits moyens (12) de chargement des produits dans l'équipement, c'est-à-dire depuis lesdits moyens, ou surface (120), correspondants, de support des produits, dans une position respective (19) pour retourner le produit, en particulier avant d'effectuer la découpe ou la séparation de la partie ou forme (11') respective de la partie restante du produit ou du blister (11") .

12. Equipement selon la revendication 11, **caractérisé en ce que** la dite position de retournement du produit est définie par un petit plan (190) présentant une fente (19) respective, qui de préférence est verticale et/ou ouverte à une extrémité pour favoriser l'insertion des moyens de préhension (132), c'est-à-dire de la tige des moyens d'aspiration (132), qui, après la préhension du produit dans une position inappropriée, le font pivoter de 180° et le placent ou posent sur le petit plan (190).

13. Equipement selon la revendication 12, **caractérisé en ce que** ladite fente de retournement (19) a la forme d'une fente traversante obtenue dans un petit plan (190), de préférence en saillie depuis ou sur le prolongement dudit petit plan de coupe (15'), ladite fente (19) étant de préférence ouverte (en 191), à une extrémité dudit plan (190), pour favoriser l'insertion des moyens de préhension (132), c'est-à-dire de la tige des moyens d'aspiration (132), dans la même fente (19).

14. Equipement selon l'une quelconque des revendications précédentes, **caractérisé en ce que** lesdits moyens, ou robot (13), de transfert des produits sont adaptés pour transférer les mêmes produits, notamment à partir desdits moyens (12) de chargement des produits dans l'équipement, c'est-à-dire depuis lesdits moyens, ou surface (120p) correspondants, de support des produits, dans une position (155) respective pour l'insertion directe dans lesdits moyens d'emballage (14), notamment dans les moyens correspondants pour acheminer le produit dans le support, ou pochette, pour le logement de celui-ci.

15. Equipement selon l'une quelconque des revendication précédentes, **caractérisé en ce que** lesdits moyens, ou robot (13), de transfert des produits sont adaptés pour transférer les mêmes produits, notamment à partir desdits moyens (12) de chargement des produits dans l'équipement, c'est-à-dire depuis lesdits moyens, ou surface (120) correspondants, de support des produits, dans une position respective d'application ou d'activation des moyens adhésifs correspondants et/ou dans une position d'adhésion, de préférence ultérieure, du produit au support de boîtier, ou pochette respectifs.
